# EUROPEAN PATENT APPLICATION

(11) **EP 1 557 094 A1**
(43) Date of publication of application: **27.07.2005**
(21) Application number: 04075250.3
(22) Date of filing: 26.01.2004
(51) Int. Cl.: A23L 1/03, A23L 1/0522, A23L 1/00, A23D 7/015, A23C 9/154, A23L 1/187

(54) **Improved semi-solid food products and methods for their production based on inhibiting amylase induced starch breakdown**

(71) Applicant: Wageningen Centre for Food Sciences, 6703 GW Wageningen (NL)
(72) Inventor: Weenen, Hugo, 1261 RV Blaricum (NL); De Wijk, René Alexander, 6871 BD Renkum (NL); Hamer, Robert Jan, 3813 RS Amersfoort (NL)
(74) Representative: van Westenbrugge, Andries

(57) **Abstract**

The present invention relates to the field of food production, in particular to methods of producing improved semi-solid food products and to the improved semi-solid food products themselves and their use. In particular, in-mouth salivary amylase induced starch breakdown is inhibited.

## Description

### Field of the invention

The present invention relates to the field of food production, in particular to methods of producing improved semi-solid food products and to the improved semi-solid food products themselves and their use.

### Background of the invention

A number of researchers have investigated the effect of saliva on selected attributes and have found that saliva may exert diverse effects on food, resulting in changes in the way it is perceived (Smith *et al*. 1996; Bonnas & Noble 1995; Rudney *et al*. 1995; Noble 1995; Guinard *et al*. 1998). The mixing of saliva with food can influence flavor (Guinard *et al*. 1997; Haring 1990; Harrison 1998; Ruth & Rozen 2000; Ruth *et al*. 1996) and can cause taste and flavor substances to become diluted (Ruth et al. 1996; Christensen & Role 1985). α-Amylase (EC 3.2.1.1.), an enzyme present in mammalian saliva, which initiates the digestion of starch, plays a role in the initial breakdown of food and may cause a drop in perceived thickness of the food. Furthermore, saliva also acts as a buffering system (Shannon & Frome 1973; Larsen *et al*. 1999; Ericsson 1959), affecting the degree to which we perceive sourness (Christensen *et al*. 1987). In addition to that, the large salivary proteins, such as mucins, may influence the lubrication (Tabak *et al*. 1982; Van Nieuw Amerongen 1994) and hence possibly the perception of attributes such as smoothness and astringency (Noble 1995; Kallithraka *et al*. 2001).

No correlation has been found between a subject's individual flow of unstimulated and stimulated saliva, and his/her sensory ratings of starch-containing semi-solid food (Engelen *et al*. 2003a). The absence of prominent relationships between individual flow rates or amylase activities with individual sensory ratings may be explained by the hypothesis that all subjects have their own references and are apparently used to their idiosyncratic salivary flow and chemistry. As a result, sensory ratings are relative rather than absolute which results in the absence of between-subject differences (Engelen *et al*. 2003a). Another study, which investigated the effects of added saliva or saliva-related fluid on sensory attributes of custard desserts, concluded that in general the sensory attributes of semi-solids were relatively stable (Engelen *et al*. 2003b).

W003/001199 discloses an instrumental method for predicting in-mouth sensory properties of water-continuous foodstuffs (custards) based on analysing the spatial distribution of the dispersed lipid phase of a sample subjected to in-mouth mastication. This technique shows that fat globules are redistributed during food processing in the mouth, and this is expected to influence the sensory perception of the semi-solid food product. Based on this disclosure it would thus be expected that fat distribution, fat concentration and in-mouth starch breakdown are important in determining the sensory rating of semi-solid food products. Intact starch entraps fat, thus making its availability for sensory perception limited. In-mouth breakdown of starch will allow redistribution of the fat globules, hence this may enhance the fat dependent sensory properties, such as creaminess or fattiness. In contrast to what is expected based on W003/001199, the present inventors surprisingly found that the sensory rating of semi-solid food products comprising starch can be improved by reducing the starch structure breakdown in the mouth, which is induced by salivary amylase.
EP0451436-A1 describes the oral administration of an α-amylase inhibitor to cure or prevent obesity. The problem of high calorie absorption by the intestine is solved herein through inhibition of both salivary and pancreatic α-amylase activity, thereby preventing starch breakdown and calorie uptake. There is no indication in this disclosure that in-mouth inhibition of starch breakdown has any influence on the sensory rating of certain food products.

### Definitions

"Semi-solid food products" as used herein refer to products suitable for human or animal consumption, which are viscous, i.e. which are neither in a completely liquid nor in a completely solid form. The term semi-solid includes thus viscous liquids. In general, semi-solid food products are masticated without chewing. A "low-fat" semi-solid food product refers to a semi-solid food product in which the total fat content has been reduced compared to the standard normal-fat product, preferably so that the low-fat product has at least 30%, 40% or 50%, 80%, 90%, 95%, 99% or 100% less fat than the normal-fat product. For example, when referring to a product which normally has about 3 wt% fat content (e.g. custard or cream dessert), a corresponding low-fat product has only 2.1 wt% fat or less. When referring to a product which normally has about 35 wt% fat content (e.g. mayonnaise), a corresponding low-fat product is a product with only 24.5 wt% fat or less (e.g. low-fat mayonnaise), and so forth.

"Starch" is used herein to refer to any type of starch obtainable from higher plants (natural or genetically modified), such as potato starch, maize/corn starch, pea starch, rice starch, wheat starch, tapioca starch and the like. Starch is composed of a mixture of two polymers, an essentially linear polysaccharide, amylose (a polymer of glucose units), and a highly branched polysaccharide, amylopectin. Both contain α - D - (1→4) glucosidic bonds, but amylopectine also contains α - (1→6) glucosidic bonds.

"Sensory rating" or "sensory perception" is used herein to refer to a subject's rating of one or more sensory attributes of a food product. An "improved" sensory rating refers to an increased rating of one or more desired (or positive) sensory attributes, such as for example increased creamy mouthfeel, increased fatty mouthfeel, and the like. Improved sensory rating may also refer to a decreased rating of one or more non-desired (or negative) sensory attributes, such as for example a decrease in bitter taste (bitterness), rough mouthfeel, heterogeneous mouthfeel, astringent afterfeel, or sliminess.

"Sensory attributes" or "sensory properties or characteristics" refers to (a) the mouthfeel and/or (b) the odor and/or (c) the flavour (or taste) and/or (d) the afterfeel (or aftertaste) of a food-product when processed in the mouth and/or after swallowing. These main sensory attributes can be further subdivided into different sensory attributes, as defined below. Generally, each attribute is scored on a scale from "very little" to "very much", unless indicated otherwise.

The term "odor attributes" comprises one or more of the following sensory attributes: total odor intensity, fatty odor, vanilla-, caramel-, almond-, synthetic/sickly-, milk- odor.

The term "flavor attributes" or "taste attributes" comprises one or more of the following: total flavor intensity, sweet, bitter/chemical, almond, vanilla, caramel, milk, cream, fatty, sickly, sour.

The term "mouth feel attributes" comprises one or more of the following:
- "temperature" sensation (warmer or colder sensation; foods may elicit different temperature sensations although presented at the same physical temperature; the sensation is acquired during first contact between food and tongue)
- "thick" or "thickness" (ranging from thick to thin; the thickness sensation of the food in the mouth after it has been compressed through up- and down motions of the tongue against the palate)
- "airy" (food is perceived by the tongue as airy/foamy and disintegrates easily if compressed against the palate)
- "compact" (food feels heavy/consistent and does not move easily. The thick sensation persists after food is compressed against palate.)
- "melting" or "thinning" (from slow to quick; food becomes thin in the mouth and spreads throughout the mouth at different rates)
- "prickling" (a tingling feeling sensed by the tongue; typically associated with slightly carbonated soft drinks)
- "smooth" (from smooth to grainy; degree to which food contains granules detected by moving the tongue parallel to the palate)
- "heterogeneous" or "heterogeneity" (food is sensed simultaneously as thick and thin (or "cloudy" or "flocky") in the mouth while it is being mixed with saliva; various parts of the food seem to melt at different rates.)
- "dry" or "mealy" (food seems to absorb saliva, making it difficult to swallow while it is compressed between tongue and palate; the surface of the mouth feels rough)
- "creamy" (a range of sensations typically associated with fat content, such as full and sweet taste, compact, smooth, not rough, not dry, with a velvety (not oily) coating; food disintegrates at a moderate rate)
- "fatty" (food leaves a fatty and oily layer on oral tissues, lubricating food transport in the mouth and stimulating saliva production)
- "sticky" (food is pulled apart by downward movements of the tongue and the resulting threads are sensed as sticky by tongue, palate and throat, making swallowing difficult)
- "rough" (roughness sensed on teeth, palate and tongue, typically caused by products such as walnut, spinach, and wine)

The term "afterfeel attributes" comprises one or more of the following:
- "creamy" (similar to soft/creamy mouthfeel sensations but less intense)
- "sticky" (food leaves a sticky feeling in the whole mouth, which is difficult to remove/clear)
- "fatty" or "fat" (food leaves a fatty/oily feeling in the mouth after swallowing)
- "astringent" (food leaves an astringent taste and feeling in the mouth; typically caused by products such as wine, nuts and spinach)
- "slime producing" (food leaves a feeling of thick mucus in the mouth that is difficult to clear and swallow; typically caused by dairy products)

"Amylase inhibitor" is used to refer to a non-proteinaceous or proteinaceous inhibitor, which is able to inhibit the activity of human salivary α-amylases (EC 3.2.1.1, α-1,4-glucan-4-glucanohydrolases), produced by the parotid glands. "Inhibition" in this respect refers, for example, to a reduction in the number of α - D - (1→4) glucan linkages hydrolized and/or a delay in the rate of substrate (starch) hydrolysis of endohydrolysis of α - D - (1→4) glucan linkages by the salivary α-amylase enzymes. A complete inactivation of the salivary α-amylase activity is also encompassed by this definiton.

The term "reducing starch structure breakdown" as used herein refers to a reduction in the number of α - D - (1→4) glucan linkages hydrolized and/or a delay in the rate of endohydrolysis of α - D - (1→4) glucan linkages of starch in-mouth. A complete prevention of starch structure breakdown in-mouth is also encompassed by this definiton.

### Description of the invention

As soon as a food product is placed into the oral cavity (in-mouth) it comes into contact with saliva, which comprises salivary α-amylase(s). These enzymes induce the structure breakdown of starch, by endohydrolysis of α - D - (1→4) glucan linkages present in starch molecules. The present invention is based on the surprising finding that the sensory rating of starch comprising, semi-solid food products is improved by reducing or inhibiting the starch structure breakdown.

In one embodiment of the invention a method for improving the sensory rating of a semi-solid, starch comprising food-product is provided. The method comprises reducing the starch structure breakdown, which is induced by salivary α-amylases as soon as contact between the food product and the saliva (comprising the enzymes) is made, and in particular as soon as the salivary α-amylases come into contact with the starch comprised in the food-product.

The semi-solid food product may be any semi-solid food-product comprising starch, such as but not limited to custard or cream desserts, other starch based desserts, mayonnaises, dressings, sauces, salad-dressings, baby-food, soups, a condensed milk product or a sweetened condensed milk product and the like. In one embodiment the starch comprising, semi-solid food product is a low-fat product as defined elsewhere herein. Without limiting the scope of the invention, it is thought that in normal fat product some of the sensory attributes, such as for example creaminess, are less affected.

An improvement in sensory rating is understood to be an improvement in at least one sensory attribute of the product. As improvement is a relative term, it is understood that the improvement should be repeatable and statistically significant. Generally a statistical confidence level of at least 95%, preferably at least 99% should be obtained. This means for example that sensory ratings have to be carried out by at least eight highly trained subjects and preferably repeated at least twice. In order to determine the sensory rating an attribute of a (modified) food-product, trained subjects are provided with the modified food-product (stimulus) and the corresponding unmodified product as a control (optionally also a corresponding non-starch comprising product is included) and rate a range of sensory attributes of the products, in particular odor, mouthfeel, flavour, taste and/or afterfeel using a predetermined scale, as illustrated in the Examples. Generally 35 different sensory attributes can be distinguished and rated (de Wijk *et al*. 2003a). Mostly in-mouth sensory attributes are rated. Some sensory attributes relate to in-mouth sensory attributes following swallowing, such as afterfeel and aftertaste. A skilled person will be able to use standard sensory rating methods to determine whether a starch-based product, which has been modified to cause an in-mouth reduction in salivary amylase-induced starch breakdown, has one or more improved sensory ratings compared to the analogous unmodified product, in which no measures have been taken to reduce the in-mouth salivary amylase induced starch break down.

In a specific embodiment of the invention the sensory rating of one or more attributes selected from odor attributes (e.g. odor intensity, vanilla odor), mouthfeel attributes (e.g. thickness, creaminess, fatty mouthfeel), flavor attributes (e.g. vanilla), afterfeel attributes (e.g. creamy afterfeel) and aftertaste attributes (e.g. creamy aftertaste) are improved by reducing the starch structure breakdown in-mouth. The rating of the improved attribute assigned to the modified product is statistically significantly different (p<0.05) from the rating of the corresponding attribute of the unmodified product using a statistical repeated-measures design. Each attribute is rated on a scale, ranging from the least desired to the most desired. For example 'creamy mouthfeel' can be rated from 'not at all creamy' to 'very creamy'. Generally, it is known *per se* which range of the scale is the "desired" range and which is the "undesired" end, although this will vary according to the specific food product tested.

Preferably the sensory rating of more than one sensory attribute is improved in the method of the invention. Most preferably at least creamy mouthfeel is improved.

The reduction of the in-mouth starch structure breakdown can be achieved by various means. In one embodiment it is achieved by the addition of one or more α-amylase inhibitors to the starch comprising, semi-solid food product. Preferably the α-amylase inhibitor is added in an effective amount, i.e. in an amount sufficient to reduce in-mouth starch structure breakdown and to cause an improved sensory rating. The amount required will vary depending on the specificity and optimum activity of the inhibitor used. The effective amount required can easily be determined by a skilled person without undue experimentation. Further, the α-amylase inhibitor should be food-grade, and not harmful when ingested by a human or animal subject.

Various suitable α-amylase inhibitors are available in the art. For example proteinaceous α-amylase inhibitors (hereinafter referred to as "α-amylase inhibitor proteins") and genes encoding these have been isolated and/or cloned from various plant seeds and vegetative organs, such as from *Triticum aestivum, Sorghum bicolor, Secale cereale, Phaseolus vulgar* and others (see Franco *et al*. 2002, incorporated herein by reference). Several α-amylase inhibitor proteins have a high specific activity against mammalian salivary α-amylases. Suitable inhibitor proteins would be for example the 0.19, 0.28 (see US 5,444,046 incorporated herein by reference) or the 0.53 inhibitor (see US 5,726,291 incorporated herein by reference) from *T. aestivum*, the 1,2,3 and BIII inhibitor from S. *cereale* or the SIα1, Siα2, Siα3 inhibitors from *S. bicolor.* Nucleic acid and protein sequences of these genes are generally available in sequence databases, such as SWISSPROT, GenBank, EMBL, GeneSeq, and others. The α-amylase inhibitor protein may be produced by recombinant DNA technology as known in the art (e.g. recombinant proteins produced by transformed bacteria, plants, plant cells, fungi, cell cultures, etc.), or may be purified from its natural source or synthesized chemically. If the semi-solid food comprises plant based ingredients, the α-amylase inhibitor protein may also be over-expressed in a transgenic plant, and the processed plant product may be used directly in the preparation of the semi-solid food product. It is also envisaged, that the transgenic plant is a starch comprising plant, so that both the starch and the α-amylase inhibitor protein may be provided directly by the processed plant tissue. Methods for introducing recombinant DNA into bacterial-, fungal-, plant- or animal cells are well known, such as particle gun transformation, protoplast transformation, electroporation, *Agrobacterium* mediated transformation and the like.

Also, non-proteinaceous inhibitors, such as acarbose and various sugars (mono-, di-, polysaccharides), and analogues thereof, may be suitable, as long as they are non-toxic when ingested by mammalian subjects, particularly humans. The most suitable (protenaceous or non-protenaceous) inhibitor has a high specific activity against mammalian, especially human, salivary α-amylase and is highly effective under in-mouth conditions (pH, temperature), while it preferably does not inhibit (or has a low inhibitory effect on) pancreatic α-amylases. Further, as mentioned above, it preferably has no negative side effects when ingested at the concentration at which it is present in the food-product. For example, side effects such as loss of body weight should not occur as a result of ingestion.
It is understood, that the invention is not limited to the (protenaceous or non-protenaceous) α-amylase inhibitors described herein. Other suitable inhibitors can be easily determined by a skilled person, by for example testing the ability of various amounts of a potential inhibitor to inhibit human salivary α-amylase. For this purpose *in vitro* enzyme assays as known in the art are suitable. Likewise, assays as described in the Examples may be used. In the same way synergistic activity between two, or more, different inhibitors can be determined. Synergistic activity is seen if the inhibitory effect of two (or more) inhibitors used together is higher than that of each inhibitor used by itself. For example, the use of both maltose and a pH-reducing compound may have a higher inhibitory activity than each alone. Potential further non-protenaceous inhibitors may, for example, be polysaccharides, especially disaccharides (e.g. maltose, maltodextrin), or polysaccharide analogs such as for example galactomannan or inuline.

An assay suitable for determining the activity of a potential salivary alpha-amylase inhibitor is described in the Examples. In this assay a starch-comprising food product, such as for example 30g vanilla custard (e.g. Friesche Vlag), is mixed with a certain amount of the potential inhibitor(s) and with human saliva (diluted). The change in viscosity of the mixture is then analysed for about 120 seconds using a Rapid Viscoanalyser. As a control the custard to which water, instead of saliva and inhibitor, has been added is used. In particular viscosity at about 48 seconds is used to determine the percentage starch-structure breakdown inhibition, which is due to the inhibitor(s). The effect on viscosity is an indirect measure of salivary α-amylase inhibition.

In one embodiment of the invention monoglycerides are used as inhibitor to inhibit in-mouth starch structure breakdown induced by salivary amylase and semi-solid starch comprising food products which further comprise at least 1 wt%, 5 wt% or 10 wt% monoglycerides are provided. Such products have improved sensory ratings as described above. It has been found by the inventors that addition of at least 1 wt% monoglyceride to a starch-comprising semi-solid food product significantly reduced salivary-induced starch-structure breakdown. Monoglycerides are partial esters of glycerol with higher molecular fatty acids (monoacylglycerols). They are commonly used as emulsifiers in food products. Monoglycerides can be obtained commercially (e.g. from Quest International B.V., The Netherlands), purified from natural animal or plant sources, or made synthetically. Suitable monoglycerides may be derived from any fatty acids and may be straight chain or branched, saturated or unsaturated and having 8 to 22 carbon atoms.

In another embodiment of the invention a pH-modifying (acidifying) compound or an amide reagent is added to the semi-solid food products, as amide reagents and low pH (below pH 7, such as for example about pH 6, pH 5, or less) are also known to reduce or inhibit α-amylase activity. Under acidic conditions the enzymatic rate slows down, and the enzyme cannot hydrolyse the glycosidic bonds as fast. At a pH of about 5 or less α-amylase activity is essentially inhibited completely. The pH-modifying compound or amide reagent may be added at different stages during the production of the food-product, as long as the final product, when macerated in the mouth, causes the desired salivary α-amylase inhibitory effect. The effective amount of acidifying compound or amide reagent required will vary, depending on the activity of the compound or agent used. The effective amount can be readily determined by a skilled person. Preferably, the pH of the product is lowered to pH 6.3 or less. Examples of suitable edible acidifying compounds are citric acid, ascorbic acid, hibiscus acid, oleanolic acid, etc.

In another embodiment the reduction of the in-mouth starch structure breakdown is achieved by chemical and/or physical modification of the starch. Starch may be modified directly in the food-product or pre-modified starch may be added to the semi-solid food product. The starch is modified so that it becomes more resistant to salivary α-amylases breakdown. "More resistant" refers in this respect to a slower rate of hydrolysis by the salivary α-amylases, a lesser degree of hydrolysis or to complete prevention of hydrolysis. Chemical modification of starch can be carried out by, for example, replacing some hydroxyl groups by either ester or ether groups, or by chemically cross-linking hydroxyl groups on neighboring starch molecules. Cross-linked starch has, therefore, cross-links in and/or between starch molecules. Cross-links may be formed as known in the art, for example by means of chemical reagents capable of reacting with the hydroxyl groups in and/or between starch molecules. Examples of cross-linking agents are phosphorus oxychloride, sodium trimetaphosphate, adipic acid, epichlorohydrin, etc. In one embodiment high cross-linked starch is used according to the invention in order to provide starch comprising semi-solid food products with improved sensory rating, in particular improved creaminess, as further described in the Examples.

Very low levels of chemical modification can significantly change the rheological, physical, and chemical properties of starch. Starch modification has been described in the art, for example US 6,607,748 describes cross-linking and hydroxyprolation of high amylose starch (for pharmaceutical applications), and US2001026827 describes thermochemically modified starch.

Increased resistance of the chemically/physically modified starch to salivary α-amylases breakdown can be initially tested by *in vitro* enzyme assays, using mammalian (preferably human) α-amylase. If a significant increased resistance is found *in vitro,* different amounts of the chemically modified starch can be added to a test food product and a sensory rating carried out (comparing the sensory attributes of the food product comprising the chemically and/or physically modified starch to the product comprising normal commercially available starch).

Chemical modification of the starch may also be carried out *in vivo,* in for example a transgenic organism, such as for example a bacterium or a plant. For this purpose the enzyme(s) carrying out the chemical modification can be cloned and over-expressed in the host organism using known methods. For example, a range of starch synthetic enzymes of plants have been cloned (e.g. starch synthases, starch branching enzyme, phosphoglucomutase, etc.) and used or modified in order to generate starch with novel properties *in vivo.* Likewise, mutant plants, producing modified starch can be generated using known mutagenesis methods (X-ray, chemical mutagenesis, etc.). It is also possible to use RNAi technology to down-regulate or silence endogenous plant genes, in particular genes of the starch biosynthetic pathway, to generate plants, which produce modified starch. Examples of both mutant plants and genetically modified plants producing starch with altered characteristics are well known, see e.g. US 2003110534 or US 6,376,749.

The chemically and/or physically modified starch may be added in addition to the normal starch present in the product or may be used to replace the normal (unmodified) starch of the product.

In yet another embodiment the reduction of the in-mouth starch structure breakdown is achieved by coating of the starch so that it becomes inaccessible or less accessible or accessible more slowly to salivary α-amylases when the food product is brought into the mouth. The degree and timing of physical contact between the starch and the salivary α-amylases is thus modified by coating the starch so that the in-mouth starch structure breakdown is reduced. The coating applied to the starch is preferably edible. Edible coatings can for example be made from plant proteins, such as but not limited to zein (the most abundant corn protein), soy protein, wheat gluten, whey protein, gelatin, casein and the like. The coating may also consist of chemically and/or physically modified starch. The coating may comprise additional components, such as water, ethanol, or other edible constituents and may for example be sprayed onto the starch granules. The starch which is coated may be unmodified or chemically (and/or physically) modified starch. The use of both chemically and/or physically modified starch, surrounded by an edible coating, may be particularly effective in reducing in-mouth starch structure breakdown. As salivary α-amylase is essentially inactive at a pH of 5 or less, the coating may consist of or comprise a pH lowering (acidifying) compound or agent.

Also provided are starch comprising, semi-solid food products, which are made according to the methods of the invention and which have an improved sensory rating of at least one sensory attribute (selected from odor, mouthfeel, flavour, taste, afterfeel or aftertaste attributes as described above) when processed naturally in the oral cavity during eating (mastication - with or without chewing - and swallowing). A food-product according to the invention preferably comprises at least 1-10 wt% of starch. Further, in one embodiment the food-product according to the invention is a low-fat product, for example a starch comprising custard comprising less than 3 wt% fat, preferably less than 2 wt% fat, more preferably less than 1 wt% fat, such as for example 0.1 wt% fat. In one embodiment the food-product comprises an effective amount of one or more α-amylases inhibitors as defined above. In another embodiment it comprises chemically modified starch, as described herein above. In yet a further embodiment it comprises coated starch, as described herein above.

Food products comprising combinations of any of the embodiments described herein, which result in inhibition of salivary induced in-mouth starch structure breakdown and an improved sensory rating are also encompassed herein. For example, a food product with both a non-protenaceous amylase inhibitor and a acidifying compound may yield a product which has even better sensory attributes than if the non-protenaceous inhibitor or acidifying compound were added alone. Thus, all combinations of protenaceous- and/or non-protenaceous (including acidifying compounds, sugars, glyceraldehyde) inhibitors with one another or with chemically modified and/or coated starch are encompassed.

Further, the use of an α-amylase inhibitor to improve the sensory rating of a semi-solid, starch comprising food-product is provided, whereby the amylase inhibitor is added to the food product in an effective amount, i.e. in an amount sufficient to reduce the starch structure breakdown, which is induced upon contacting salivary α-amylases with the food product.

Similarly, the use of chemically modified starch and/or coated starch as described above is provided by the invention, whereby starch is added to the food-product or is used to replace the normal starch comprised in the food-product.

Likewise the use of monoglycerides as described above to improve the sensory rating sensory rating of a semi-solid, starch comprising food-product is provided, whereby the monoglycerides are added to the food product in an effective amount, i.e. in an amount sufficient to reduce the starch structure breakdown, which is induced upon contacting salivary α-amylases with the food product.

It is understood that the following Examples do not limit the invention to any of the particular embodiments described, such as for example to the particular test food used (vanilla custards).

### Description of figures

Fig. 1(a) Predicted versus measured creamy mouthfeel ratings for the amylase study.
Fig. 1(b) Predicted versus measured creamy mouthfeel ratings for acarbose study.
Fig. 2 The effect of monoglyceride on viscosity (cP) of full-fat vanilla custard (Friesche Vlag), as measured over 120 seconds (horizontal axis).

### Examples

### Example 1

The role of salivary amylase in modifying texture sensations was evaluated in the following examples, in which the level of amylase activity was varied within subjects, rather than between subjects. Alpha-amylase was added in varying concentrations to starch and CMC (non-starch)-based vanilla custard desserts. Additionally, amylase activity was inhibited to various degrees by adding the pharmaceutical amylase inhibitor Acarbose (CAS nr. 56180-94-0) in various concentrations to the same test foods.

Vanilla custard/cream desserts were used as test foods. Custard/cream dessert is a popular dairy product in The Netherlands, typically containing modified starch, milk, sugar, hydrocolloids such as carrageenans, colorants and aromas. The sensory characteristics of vanilla custard desserts have been reported elsewhere (Weenen *et al*. 2003; de Wijk *et al*. 2003b). As a comparison, non-starch CMC-based custard desserts were used. Given sufficient time, a starch-based vanilla custard dessert will be virtually liquefied by the addition of only a small amount of salivary amylase due to the enzymatic breakdown of starch. Actively stirring the amylase into the custard will dramatically increase the speed of liquefaction, but it is unclear whether such breakdown effects can occur in seconds during *in vivo* oral processing.

### 1. Materials and Methods

### Subjects

Eighteen subjects, 11 females and 7 males aged between 18 and 34 yrs, participated the 'amylase study' and 7 different subjects, all females aged between 39 and 56 yrs, participated in the 'acarbose study'. The subjects participating in the latter study had been informed about acarbose and its possibly side effects if swallowed. To avoid these side effects, subjects expectorated rather than swallowed the acarbose samples. All subjects signed consent forms expressing their willingness to participate in the studies, and all had previously been screened for olfactory and taste disorders and had received extensive training in the description of sensory mouthfeel and afterfeel attributes for semi-solid foods. Testing took place at the sensory facilities of TNO-Nutrition and Food Research in Zeist, The Netherlands.

### Sensory Stimuli

For the 'amylase study', two commercially available full-fat vanilla custard desserts (3 wt% fat AH vanille vla or "AH", Albert Heijn Corp., Zaandam, The Netherlands; and 3 wt% fat Boerenland vla or "BL", Campina Corp., Woerden, The Netherlands) were used as the two starch-based vanilla custard desserts. For the 'acarbose study', Boerenland vla was used again but the Albert Heijn vla was replaced by a low-fat dairy custard (0.1 wt% fat Creamex, Creamex Corp., Rijkervoort, The Netherlands).

In both studies, the effect of amylase and acarbose on starch-based custards was compared with their effects on non-starch custards to verify amylase-starch interactions. A non-starch custard was produced using full-fat (3 wt%) commercially available milk (Campina Corp., Woerden, The Netherlands) and adding 0.85 wt% of sodium carboxy methylcellulose (or "CMC") (Akuell AF 3295, Akzo Nobel Corp., Amersfoort, The Netherlands), 6.25 wt% of sugar and 0.33 wt% of vanilla powder. Yellow colorant (Egg yellow, Supercook, Leeds, United Kingdom) was added at 3.33 ml/l custard to match the color of the starch-based custards.

For the amylase study, a bacterial α-amylase (from *Bacillus licheniformis,* with 15 wt% NaCl and 25 wt% sucrose, Sigma Corp., Zwijndrecht, The Netherlands) was used to prepare amylase solutions at concentrations of 40, 160, and 640 units in 100µl aliquots of water. This concentration range is similar to the range of individual amylase levels found across a group of young and healthy subjects (Engelen, unpublished results). The amylase concentrations, including a control of 0 units, were added to 5 ml samples of the starch-based custards. Only the highest concentration, 640 units, and the control were added to 5 ml samples of the CMC custard.

For the 'acarbose study', 50 mg acarbose tablets (Glucobay™, Bayer) were separated into water soluble and water insoluble material by dissolving the tablets in water, mixing thoroughly and centrifuging. The water extract was freeze-dried, resulting in 40mg of dry material per 50 mg tablet. The resulting solid material was then dissolved in water at concentrations of 0.25, 0.5, 1.0, and 2 mg of acarbose and these were added, together with a 0 mg control, in 100µl aliquots to 5 ml samples of custard desserts. Again, only the 0 mg control and the highest (2 mg) acarbose concentrations was added to 5 ml samples of the non-starch CMC custard.

### Sensory Rating Procedure

Panelists were seated in sensory booths with appropriate ventilation and lighting. Testing took place over either 3 ('amylase study') or 1.5 ('acarbose study') sessions of 2 hours. Within each session, subjects were presented with 20 trials during which they received in the amylase study each of the three custards once with the various amounts of amylase and with two different processing instructions. Over the 3 sessions, each custard was presented 3 times in each condition. In the 'acarbose study', each of the three custards with various amounts of acarbose were presented twice in the first session, and once in the second half session. The stimulus presentation order was randomized per subject and per session. The trials were presented at an average rate of one trial per 5 minutes. A break separated the first and the second half of each session.

In the 'amylase study', a 100 µl aliquot of each water/amylase solution was placed on a spoon with a dispenser, the appropriate custard was added on top, and within approximately five seconds the spoon was handed to the subject and placed in the mouth with an instruction on the required type of oral processing. The reasons for using this method rather than mixing solution and product prior to administration were two-fold. Firstly, the method used mimics the situation *in vivo,* where ingested food is initially surrounded by the thin layer of saliva covering the oral mucosa. Secondly, had the α-amylase solutions been mixed with the custards prior to ingestion, the starch breakdown would have commenced before the mixture could be presented to subjects, causing a rapid decrease in viscosity. During unrestricted processing, subjects orally processed the custards in their preferred manner for 5 seconds. During restricted processing, subjects compressed the custards with the tongue against the palate, and kept it compressed for 5 seconds. In either case, after 5 seconds flavor and mouthfeel sensations were assessed before the custard was swallowed. Afterfeel sensations were assessed immediately after swallowing.

In the 'acarbose study', 100 µl aliquots of each water/acarbose solution were mixed into 5 ml custard samples and presented to the subjects. Assessments proceeded as in the amylase study, except that the samples were expectorated after oral processing and followed by a mouth rinse.

Panelists assessed sensory attributes in the chronological order in which they are perceived (as established previously by a QDA panel, de Wijk *et al*. 2003a). The set of attributes used for the amylase study was a representative subset of 35 odor, flavor, mouthfeel, and afterfeel attributes that had been generated previously. The complete set of 35 attributes was used for the acarbose study (see Table 1). The attributes appeared by category on a monitor in front of each panelist, with the attributes on the left and a 100-point response scale anchored at the extremes on the right (FIZZ Biosystemes, France, 1998). Panelists used a mouse to indicate the perceived strength of each attribute. Each product was first smelled after which the odor attributes were rated. Next, the product was taken into the mouth after which the taste/flavor and mouthfeel attributes were rated in the order in which they were perceived. Finally, the product was swallowed (amylase study) or expectorated (acarbose study), the afterfeel attributes were rated, and the panelists rinsed before being presented with the next sample. Acquisition of each subject's responses was done by computer using FIZZ software.

### Statistical analysis

The effects of amylase and acarbose concentrations and modified behaviors on sensory attributes were analyzed uni-variately using a repeated measures ANOVA (SPSS version 11.5, SPSS Inc., USA) with the Huynh-Feldt value as epsilon, carried out on the sensory data averaged across replicates. The amylase results were based on a nested within-subject design with type of starch-based custard (degrees of freedom or df: 1,16), type of oral processing (df: 1,16), and amylase concentration (df: 3,48) as the main factors. The acarbose results were based on the same statistical design with type of starch-based custard (df: 1,7) and acarbose concentration (df: 4,28) as the main factors. The results for the CMC-based custards were analyzed separately. All analyses also included tests for higher order interactions. P-values for significant results will be reported in the result section. Relationships between creamy mouthfeel and specific attributes were statistically modeled using Partial Least Squares Regression or PLSR (Unscrambler Vs. 7.5, Camo Inc., Corvallis, U.S.A).

### 2. Results

### 'Amylase study'

Ratings averaged across subjects for flavor and texture attributes are shown in Table 2. The results indicated that added amylase failed to affect any of the odor, mouthfeel or afterfeel attributes for the non-starch CMC-based custard, and that it affected the intensity of bitter/chemical flavor which increased when amylase was added (p=0.01). In contrast, a large number of attributes of the starch-based custards were affected by added amylase. With increasing amylase concentration, sensations of thick mouthfeel (p=0.004), creamy mouthfeel (p<0.0001), fatty afterfeel (p=0.05) and vanilla flavor (p=0.001) decreased, while sensations of melting mouthfeel (p=0.001), heterogeneous mouthfeel (p=0.006), and bitter/chemical flavor increased significantly. For CMC-based custards, the type of oral processing affected only airy mouthfeel, which was most intense in the unrestricted condition (p=0.01). For the starch-based custards, unrestricted compared to restricted processing resulted in higher ratings of melting (p=0.02), roughness (p=0.03) and vanilla flavor, and in lower ratings of prickling mouthfeel (p=0.02). Increasing the concentration of amylase was equally (in-)effective for restricted and unrestricted oral processing, as indicated by the lack of significant interactions between processing condition and amylase concentration.

### 'Acarbose study'

The presence of acarbose at the highest concentration failed to affect any of the attributes for the CMC-based custard compared to the control without any acarbose. In contrast, increasing acarbose concentrations in starch-based custard desserts resulted in a very large decrease in melting mouthfeel (p=0.001), and in increased ratings of odor intensity (p=0.05), vanilla odor (p=0.05), temperature mouthfeel (p=0.001), thick mouthfeel (p=0.01), creamy mouthfeel (p=0.05), sticky mouthfeel (p=0.02), fatty mouthfeel (p=0.02), off flavor (p=0.05), and creamy afterfeel (p=0.002). Marginally significantly increased ratings were found for fatty afterfeel (p=0.06) and slimy afterfeel (p=0.06). Results are shown in Table 3.

The results demonstrate the importance of starch breakdown, particularly for sensations related to food viscosity. The fact that hardly any effects were found in a non-starch CMC-based custard indicates that the effects of adding acarbose and amylase were indeed related to starch breakdown. For starch-based custards, amylase addition resulted in increased melting and decreased thickness sensations, whereas acarbose addition had the opposite effect, i.e., decreased melting and increased thickness. Other attributes were affected as well. Creamy mouthfeel decreased with amylase addition and increased with acarbose addition. Similar results were found for creamy afterfeel (but only with acarbose) and fatty afterfeel (both with amylase and acarbose). Creamy mouthfeel, which is considered to be a highly desirable food quality, decreased by up to 25% when amylase was added (AH custard) and increased by up to 59% when acarbose was added (Creamex custard).

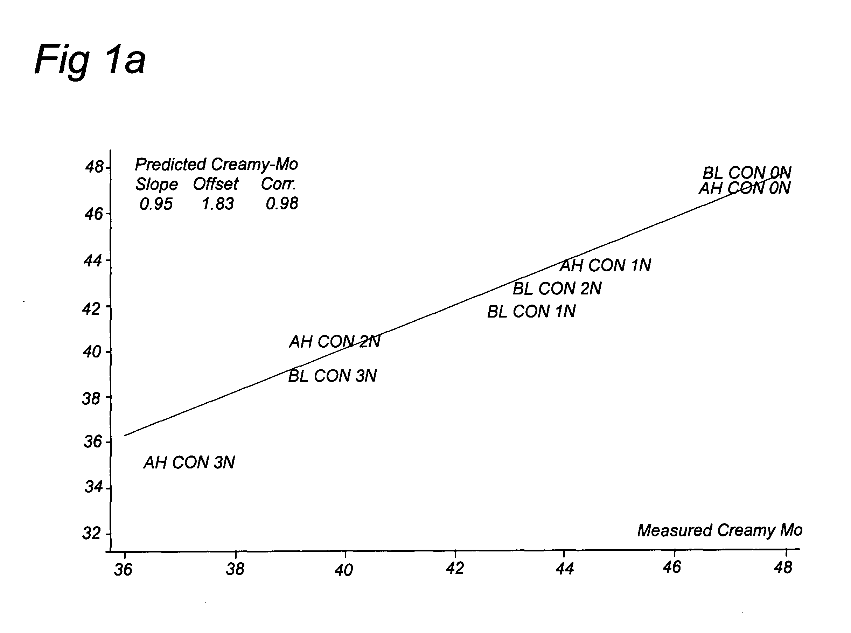

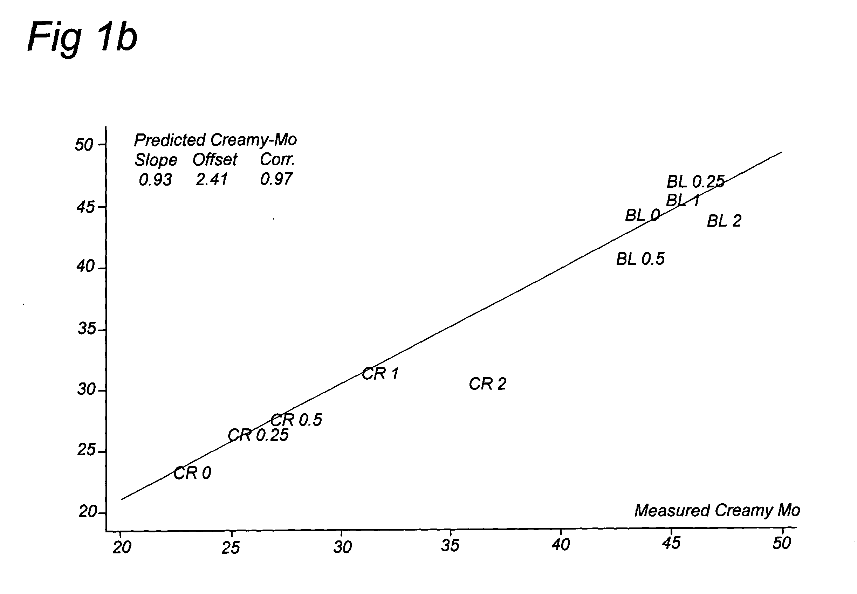

A Partial Least Square (PLS) multivariate analysis was carried out to verify whether changes in creamy mouthfeel ratings were primarily related to changes in melting and thickness ratings or whether changes in ratings of other attributes were important as well. PLS results indicate that the effect on creamy mouthfeel was only partially related to the effects on melting and thickness sensations. Changes in creamy mouthfeel caused by amylase addition were well predicted by a combination of bitter/chemical flavor, fatty afterfeel, and melting mouthfeel (r =0.98), and changes caused by acarbose addition were well predicted by the intensities of salty flavor, all flavors combined in "flavor intensity", vanilla flavors, and melting mouthfeel (r =0.98) (see Table 4 and Fig. 1a,b).

The importance of certain flavors, in combination with selected viscosity and fat related attributes, for creamy mouthfeel is consistent with the results of previously studies on the effects of carrageenan, fat and starch content on the perception of custards. In particular, creamy mouthfeel ratings were highly positively correlated with ratings of vanilla flavor (de Wijk *et al*. 2003b; Daget *et al*. 1988). Similarly, creamy mouthfeel and vanilla flavour correlated positively in the present studies (r = 0.64 for amylase and r = 0.92 for acarbose, p < 0.01). Previous studies have hypothesized that the flavor effect is related to fat content. Increased fat content results in increased flavor release of the fat-soluble flavors typically associated with creamy foods, such as vanilla flavors as well as oily/fatty and creamy flavors. These fat-derived flavors seem to suppress certain undesirable flavors, such as bitter/chemical flavors, that may stem from ingredients other than fat, e.g. from starch. In addition, it has been suggested that lubricative properties also affect creamy mouthfeel sensations. In the present studies, fat content was not varied within each test custard, but it is possible that the release of vanilla flavor was varied in other ways by the presence of acarbose and amylase. Odake *et al*. (1998) instrumentally measured flavor release from cream-style dressings using a dynamic head space model that mimics the raising and lowering of the tongue by moving a plunger up and down in a sampling flask. Reduced viscosity of the foods, as a result of dilution with artificial saliva, resulted in a reduction in the release of diacetyl. It could be that the less viscous food stuck less easily to the surface of plunger and flask, resulting in reduced surface area and consequently in reduced flavor release. In the present study, the reduced intensity of vanilla flavor for custards broken down by amylase may also be related to reduced surface area - and associated reduced flavor release- of the custard in the mouth.

One of the functions of oral movement is to mix the food bolus with saliva and its enzymes to increase enzymatic breakdown (de Wijk *et al*. 2003a). Hence, the more complex unrestricted oral processing should result in increased mixing and therefore in the highest effectiveness of the added amylase. However, the lack of significant interactions between type of oral processing and amylase concentration indicate that the type of oral processing has no effect on the effectiveness of added amylase. Possibly the two types of processing used in this study, compression of the food against the palate versus unrestricted processing, were not sufficiently different. In conclusion, the Examples show that the sensory rating of semi-solid food products comprising starch is improved by reducing the in-mouth starch breakdown, which is induced by amylase activity. Improved sensory attributes include those related to viscosity, such as perceived melting and thickness, but also attributes typically related to the functionality of fat/oil, such as creaminess and fattiness.

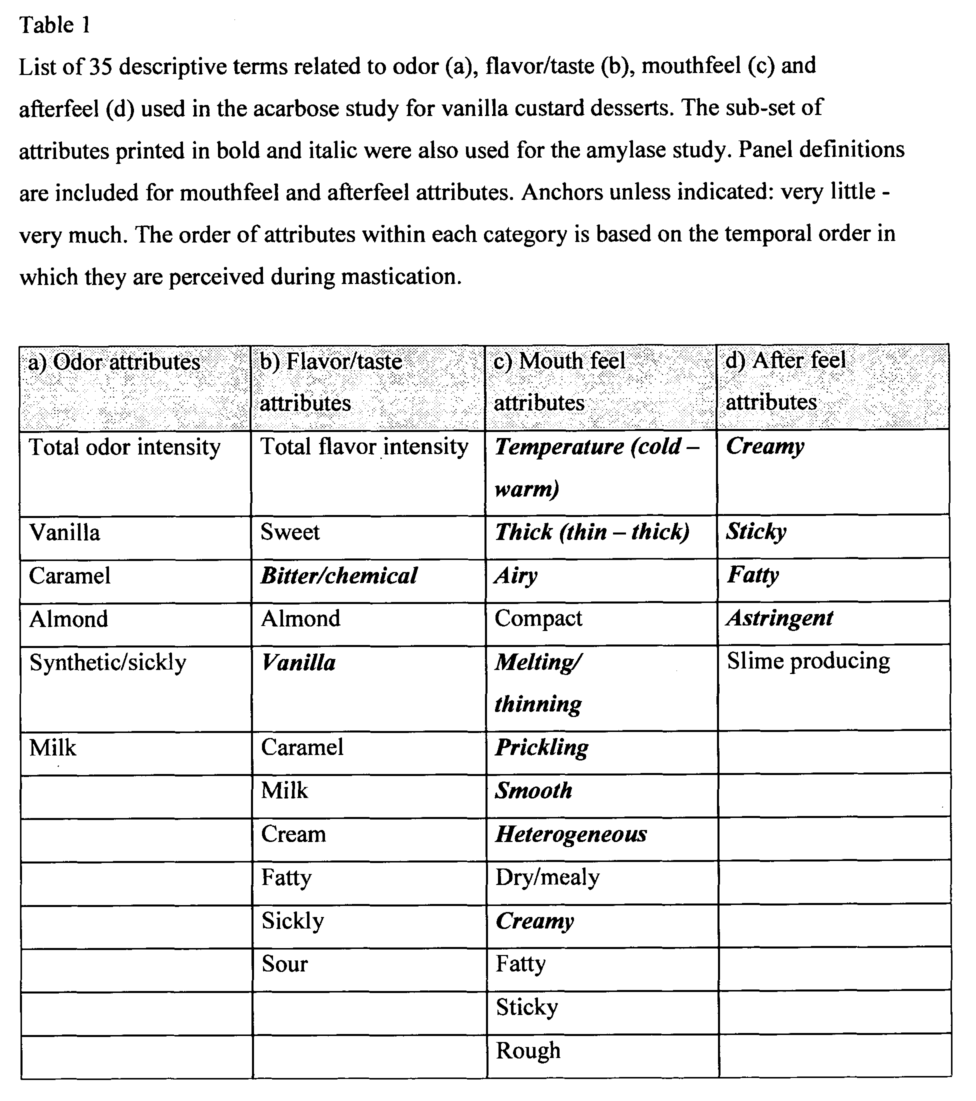

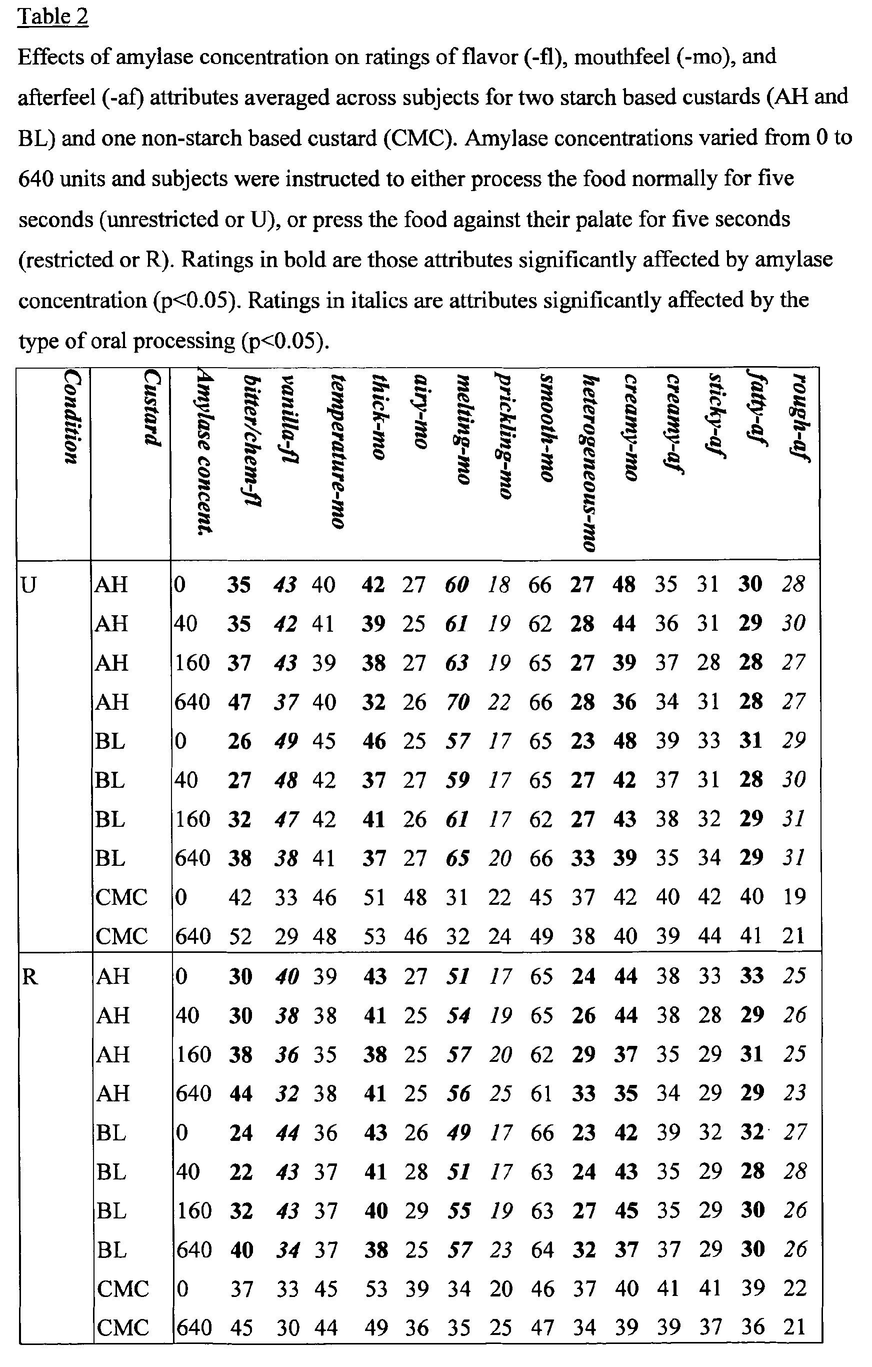

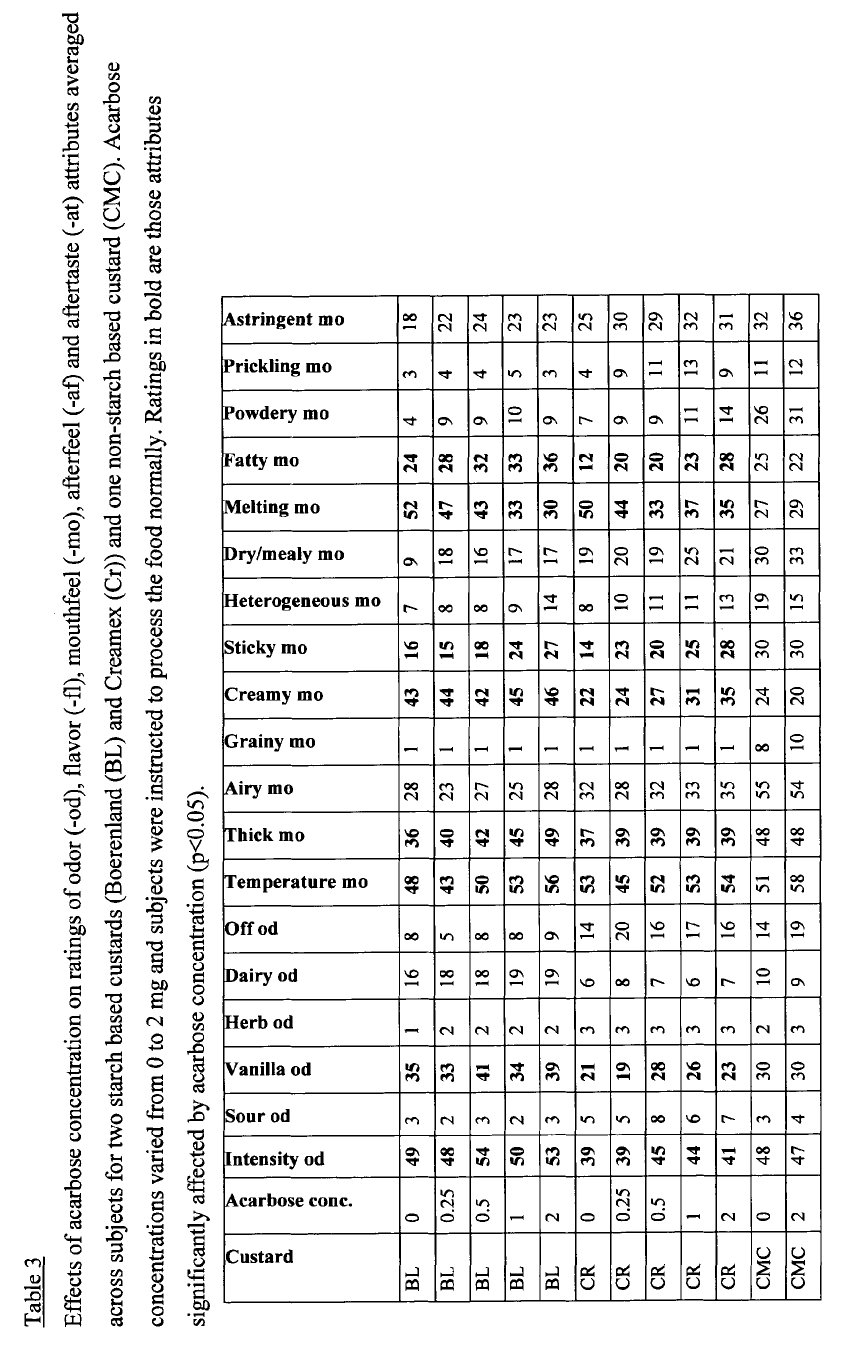

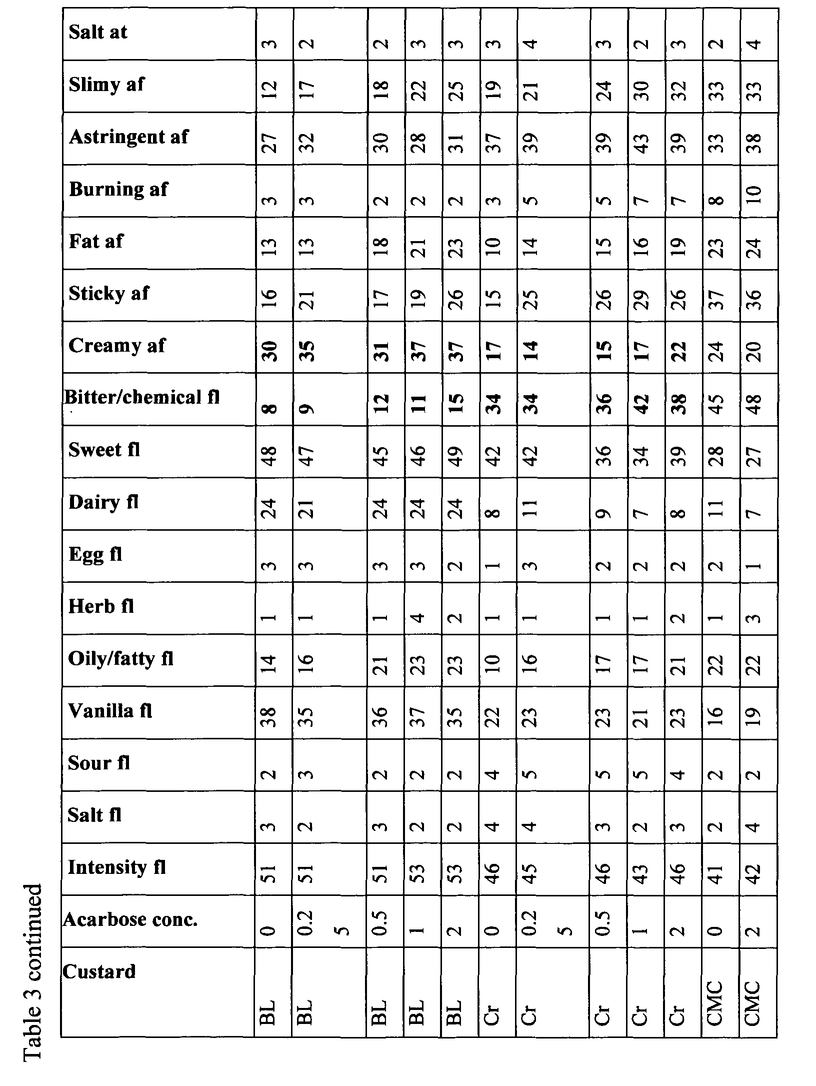

**Table 4**

| | | | | | |
|---|---|---|---|---|---|
| Partial Least Square regression coefficients plus standard errors (Se), for the acarbose (left) and amylase (right) studies, relating creamy mouthfeel ratings to ratings for other attributes. Coefficients in bold are significantly different from zero. Coefficients in italics indicate the attributes selected for the prediction of the creamy mouthfeel ratings shown in Figure 1. Amylase results are based solely on the unrestricted oral processing condition in order to ensure comparability. | | | | | |

| Attribute | Average | Se | Attribute | Average | Se |
|---|---|---|---|---|---|
| Sour-od | -0.02 | 0.03 | ***Bitter*/*chem-fl*** | ***-0.21*** | ***0.1*** |
| **Vanilla-od** | **0.18** | **0.11** | **Vanilla-fl** | **0.13** | **0.05** |
| Herb-od | -0.01 | 0.01 | Cold-mo | 0.05 | 0.06 |
| **Dairy-od** | **0.13** | **0.09** | **Thick-mo** | **0.16** | **0.07** |
| **Off-od** | **-0.10** | **0.08** | Airy-mo | -0.02 | 0.06 |
| Temperature-mo | 0.03 | **0.16** | ***Melting-mo*** | ***-0.15*** | ***0.05*** |
| **Thick-mo** | **0.08** | **0.04** | **Prickling-mo** | **-0.06** | **0.03** |
| Airy-mo | -0.03 | -0.06 | Smooth-mo | -0.02 | 0.05 |
| Grainy-mo | 0.00 | 0.01 | Heterogeneous-mo | -0.08 | 0.13 |
| Sticky-mo | 0.13 | 0.14 | Sticky-af | 0.01 | 0.05 |
| **Heterogeneous-mo** | **0.05** | **0.05** | ***Fatty-af*** | ***0.04*** | ***0.03*** |
| Dry/mealy-mo | -0.01 | 0.04 | Rough-af | 0.02 | 0.06 |
| **Melting-mo** | **-0.18** | **0.16** | | | |
| Powdery-mo | 0.05 | 0.08 | | | |
| Prickling-mo | -0.02 | 0.12 | | | |
| Astringent-mo | -0.03 | 0.09 | | | |
| ***Intensity-fl*** | ***0.07*** | ***0.02*** | | | |
| ***Salt-fl*** | ***-0.03*** | ***0.02*** | | | |
| Sour-fl | -0.02 | 0.02 | | | |
| ***Vanilla-fl*** | ***0.15*** | ***0.08*** | | | |
| Herb-fl | 0.01 | 0.02 | | | |
| Egg-fl | 0.01 | 0.03 | | | |
| **Dairy-fl** | **0.16** | **0.10** | | | |
| Sweet-fl | 0.04 | 0.08 | | | |
| **Off-fl** | **-0.22** | **0.10** | | | |
| **Sticky-af** | **0.07** | **0.04** | | | |
| Burning-af | -0.01 | 0.05 | | | |
| **Astringent-af** | **-0.08** | **0.05** | | | |
| Slimy-af | 0.10 | 0.12 | | | |
| Salt-at | -0.01 | 0.03 | | | |

### Example 2 - monoglycerides

The following experiment was carried out in order to determine whether monoglycerides are effective inhibitors of saliva-induced starch-structure breakdown.

Full-fat (3 wt%) vanilla custard (Friesche Vlag) was used in the experiment. Monoglyceride was obtained from Quest International B.V.. The monoglyceride used was Myvatex Mighty Soft XL K (product code 5Z10581).

Monoglyceride and 2ml human saliva (saliva diluted with 10°DH-water; DH refers to German degrees hardness) were added to vanilla custard (30g) to give a concentration of 1 wt% or 10 wt% monoglyceride. As controls vanilla custard (30g) with 2ml 10°DH-water only or vanilla custard with a 2ml mixture of 10°DH-water and human saliva (1:1) were used.

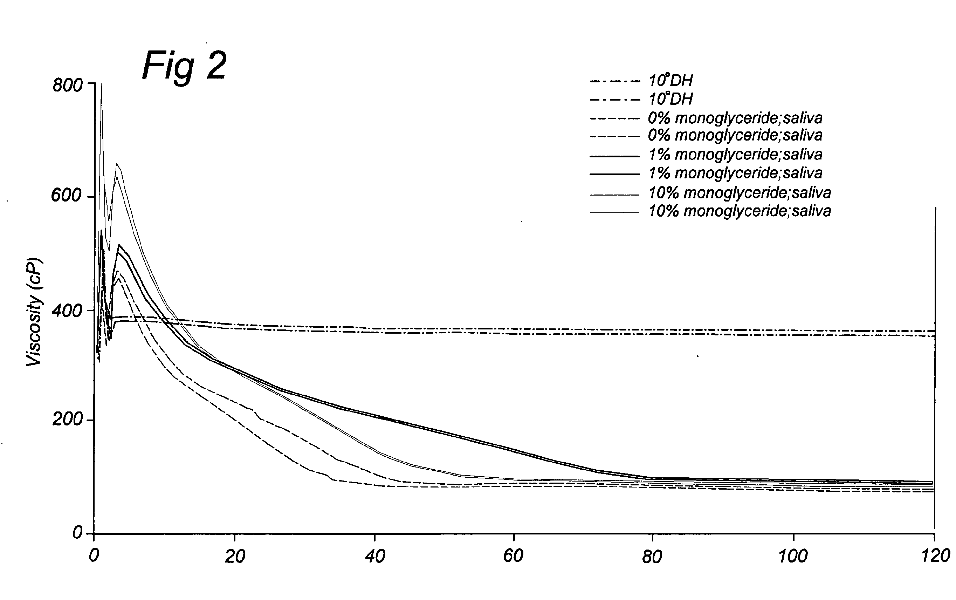

Viscosity of the samples was measyred using a Rapid Viscoanalyser RVA-4SA. The results are shown in Figure 2 and Table 5. One percent monoglyceride was very effective in inhibiting starch structure breakdown, as seen by viscosity remaining high between about 30 and 60 seconds. Ten- percent monoglyceride also showed a significant effect compared to the constrol, although not as strong as for 1 wt% monoglyceride.

**Table 5**

| Sample | Visc48 (cP) | Bendpoint (s) | t150 (s) | Decline (%) | Inhibition (%) |
|---|---|---|---|---|---|
| 10°DH water (control) | 360.0 | - | - | 0 | 100.0 |
| 10°DH water (control) | 360.0 | - | - | 0 | 100.0 |
| 0% monoglyceride; saliva (control) | 86.3 | 26.6 | 25.7 | 100.0 | 0 |
| 0% monoglyceride; saliva (control) | 89.4 | 32.2 | 32.2 | 100.0 | 0 |
| 1 wt% monoglyceride; saliva | 181.4 | 61.4 | 58.2 | 66.0 | 34.0 |
| 1 wt% monoglyceride; saliva | 187.6 | 65.0 | 61.8 | 63.0 | 37.0 |
| 10% monoglyceride; saliva | 109.5 | 36.4 | 39.0 | 92.0 | 8.0 |
| 10 wt% monoglyceride; saliva | 117.0 | 36.9 | 40.0 | 89.0 | 11.0 |
| Visc48 = viscosity at 48 seconds; Bendpoint = timepoint when viscosity begins to decline rapidly; t150 = timepoint when a viscosity of 150cP is reached; Decline = relative decline of viscosity at 48 seconds; Inhibition = calculated as (100 - Decline) | | | | | |

### Example 3 - cross-linked starch

When comparing saliva induced starch structure breakdown of custard desserts with similar amylase-induced structure breakdown properties of three starch types at iso-thickness, intensities were measured rheologically.

Farinex VA50T (tapioca based, rather low cross-linked starch) broke down most rapidly, followed by Farinex VA40 (an intermediate cross-linked potato starch) and Farinex VA70 (a high cross-linked potato starch), which showed the slowest and only moderate break down.

Sensory analysis showed that rapid break-down, associated with low cross-linked starches, resulted in low perceived creaminess, whereas slow break-down, associated with high cross-linked starches, resulted in high creaminess.

### References

Bonnans, S. R.; Noble, A. C. Interaction of salivary flow with temporal perception of sweetness, sourness, and fruitiness. Physiol. Behav. 57, 569-574, 1995.
Christensen, C. M. Role of saliva in human taste perception. In: Clinical measurements of taste and smell. Meiselman, H. L.; Rivlin, R.S. (editors), MacMillan, New York, 414-428, 1985.
Christensen, C. M.; Brand, J. G.; Malamud, D. Salivary changes in solution pH: A source of individual differences in sour taste perception. Physiol. Behav. 40, 221-227, 1987.
Daget, N.; Joerg, M.; Bourne, M. Creamy perception. I. In model dessert creams. J. Text. Stud. 18, 367-388, 1988.
de Wijk, R. A.; Prinz, J. F.; Engelen, L. The role of intra-oral manipulation in the perception of sensory attributes. Appetite, 40(1), 1-7, 2003a.
de Wijk, R. A.; van Gemert, L. J.; Terpstra, M. E. J.; Wilkinson, C. L. Texture of semi-solids; sensory and instrumental measurements on vanilla custard desserts. Food Qual. Pref., 14(4), 305-317, 2003b.
Engelen, L.; de Wijk, R. A.; Prinz, J. F; Bosman, F. The relation between saliva flow after different stimulations and the perception of flavor and texture attributes in custard desserts. Physiol. Behav., 78 (1), 165-169, 2003a.
Engelen, L.; de Wijk, R. A.; Prinz, J. F.; Janssen, A. M.; van der Bilt, A.; Weenen, H.; Bosman, F. A comparison of the effects of added saliva, α-amylase and water on texture perception in semi-solids. Accepted for publication in Physiol. Behav., 2003b.
Ericsson, Y. Clinical investigations of the salivary buffering action. Acta Odontol. Scand. 17, 131-165, 1959.
Franco *et al*. 2002, European J. Biochem. 269: 397-412.
Guinard, J.-X.; Zoumas-Morse, C.; Walchak, C. Relation between parotid saliva flow and composition and perception of gustatory and trigeminal stimuli in foods. Physiol. Behav. 63, 109-118, 1998.
Guinard, J.-X.; Zoumas-Morse, C.; Walchak, C.; Simpson, H. Relation between saliva flow and flavor release from chewing gum. Physiol. Behav. 61, 591-596, 1997.
Haring, P. G. M. Flavour release: from product to perception. In: Flavour science and technology. Bessiere, Y.; Thomas, A. F. (editors). Chichester: Wiley, 351-354, 1990.
Harrison, M. Effect of saliva-flow on flavour release from liquid foods. COST Action. 2, 91-96,1998.
Kallithraka, S.; Bakker, J.; Clifford, M. N.; Vallis, L. Correlations between saliva protein composition and some T-I parameters of astringency. Food Qual. Pref., 12, 145-152, 2001.
Larsen, M. J.; Jensen, A. F.; Madsen, D. M.; Pearce, E. I. F. Individual variations of pH, buffer capacity, and concentrations of calcium and phosphate in unstimulated whole saliva. Arch. Oral Biol. 44, 111-117, 1999.
Noble, A. C. Application of time-intensity procedures for the evaluation of taste and mouthfeel. Am. J. Enol. Vitic., 46, 128-133, 1995.
Odake, S.; Roozen, J. P.; Burger, J. J. (1998). Effects of saliva dilution on the release of diacetyl and 2-heptanone from cream style dressings. Nahrung, 42, 385-391.
Rudney, J. D.; Ji, Z.; Larson, C. J. The prediction of saliva swallowing frequency in humans from estimates of salivary flow rate and the volume of saliva swallowed. Arch. Oral. Biol. 40, 507-512, 1995.
Ruth, S. M. v.; Roozen, J. P. Influence of mastication and saliva on aroma release in a model mouth system. Food Chemistry 71, 339-345, 2000.
Ruth, S. M. v.; Roozen, J. P.; Nahon, D. F.; Cozijnsen, J. L.; Posthumus, M. A. Flavour release from rehydrated french beans (Phaseolus vulgaris) influenced by composition and volume of artificial saliva. Z-Lebensm-Unters-Forsch 203, 1-6, 1996.
Shannon, I. L.; Frome, W. J. Enhancement of salivary flow rate and buffering capacity. J. Can. Dent. Assoc., 39, 177-181, 1973.
Smith, A. K.; June, H.; Noble, A. C. Effects of viscosity and sweetness on temporal perception of astringency of grape seed and tannin. Food Qual. Pref., 7(3-4), 161-166, 1996.
Tabak, L. A.; Levine, M. J.; Mandel, I. D.; Ellison, S. A. Role of salivary mucins in the protection of the oral cavity. J. Oral Pathology 11, 1-17, 1982.
Van Nieuw Amerongen, A. Speeksel en mondgezondheid. Amsterdam: VU Uitgeverij, 1994.
Weenen, H.; van Gemert, L. J.; van Doom, J. M.; Dijksterhuis, G. B.; de Wijk, R. A. Texture and mouthfeel of semi-solid foods: Commercial mayonnaises, dressings, custard desserts and warm sauces. J. Texture St., 34(2), 148-159, 2003.

## Claims

1. A method for improving the sensory rating of a semi-solid food product comprising starch, wherein said method comprises reducing the starch structure breakdown induced by salivary amylase.

2. The method according to claim 1, wherein the semi-solid food product is a low-fat product.

3. The method according to claim 1 or 2, wherein the sensory rating is one or more of odor, mouthfeel, flavour or taste and afterfeel.

4. The method according to claim 3, wherein the sensory rating is one or more of odor intensity, fatty odors, vanilla odor, thickness mouthfeel, creamy mouthfeel, fatty mouthfeel and creamy afterfeel.

5. The method according to claim 3, wherein the sensory rating is one or more of bitterness, heterogeneity, rough mouthfeel, astringent afterfeel and sliminess.

6. The method according to any one of the preceding claims, wherein said semi-solid food product comprises one or more amylase inhibitors.

7. The method according to claim 6, wherein said amylase inhibitor is selected from one or more of the group consisting of: an α-amylase inhibitor protein, a monosaccharide, a pH-reducing compound and a monoglyceride.

8. The method according to any one of claims 1-5, wherein said starch of said semi-solid food product is chemically modified, thereby reducing the starch structure breakdown induced by salivary amylase.

9. The method according to any one of claims 1-5, wherein said starch of said semi-solid food product is coated, thereby reducing the starch structure breakdown induced by salivary amylase.

10. The method according to any one of claims 1-5, wherein said semi-solid food product comprises an acidifying compound, wherein said compound is able to lower the pH of the product to about pH 6.3 or less and thereby reduce the starch structure breakdown induced by salivary amylase.

11. A semi-solid starch comprising food product with improved sensory rating when eaten, wherein the food-product comprises an amylase inhibitor in an amount sufficient to reduce the starch structure breakdown induced by salivary amylase.

12. A semi-solid starch comprising food product according to claim 11, wherein the amylase inhibitor is selected from one or more of the group consisting of: an α-amylase inhibitor protein, a monosaccharide, a pH-reducing compound and a monoglyceride.

13. A semi-solid, starch comprising food product with improved sensory rating when eaten, wherein the starch is chemically modified, thereby reducing the starch structure breakdown induced by salivary amylase.

14. A semi-solid starch comprising food product with improved sensory rating when eaten, wherein the starch is coated, thereby reducing the starch structure breakdown induced by salivary amylase.

15. A semi-solid starch comprising food product with improved sensory rating when eaten, wherein the product comprises an acidifying compound, thereby lowering the pH of the product to about pH 6.3 or less and reducing the starch structure breakdown induced by salivary amylase.

16. The semi-solid, starch comprising food product according to any one of claim 11-15, wherein the food product is a low-fat product.

17. The semi-solid, starch comprising food product according to any one of claims 11-16, wherein the improved sensory rating is one or more of odor intensity, vanilla odor, thickness mouthfeel, creamy mouthfeel, fatty mouthfeel and creamy afterfeel.

18. The semi-solid, starch comprising food product according to any one of claims 11-17, wherein said food product is a dessert, a mayonnaise, a sweetened condensed milk product, a sauce, a dressing, a baby-food or a soup.
